# FASCICULE DE BREVET EUROPEEN

(11) **EP 0 604 324 B1**
(45) Date de publication et mention de la délivrance du brevet: **12.03.1997**
(21) Numéro de dépôt: 93403163.4
(22) Date de dépôt: 23.12.1993
(51) Int. Cl.: B60S 1/34

(54) **Essuie-glace de véhicule automobile comportant des moyens de réglage de l'orientation de la lame d'essuyage**
Kraftfahrzeugscheibenwischer mit Vorrichtung zum Verstellen der Ausrichtung des Wischblatts
Windscreen wiper for a motor vehicle with means to adjust the orientation of the wiping blade

(30) Priorité: 23.12.1992 FR 9215639
(43) Date de publication de la demande: 29.06.1994
(73) Titulaire: PAUL JOURNEE S.A., F-92700 Colombes (FR)
(72) Inventeur: Journée, Maurice, F-60240 Reilly (FR); Jehannet, Jean-Pierre, F-27200 Vernon (FR)
(74) Mandataire: Lemaire, Marc

(56) Documents cités:
- EP-A- 0 021 914
- EP-A- 0 491 603
- FR-A- 2 250 650
- FR-A- 2 563 482
- US-A- 3 161 902

## Description

La présente invention concerne un essuie-glace de véhicule automobile.

L'invention concerne plus particulièrement un essuie-glace du type comportant un bras d'essuie-glace dont la tête d'entraînement est fixée sur la portion d'extrémité d'un arbre de sortie appartenant à une unité d'entraînement de l'essuie-glace.

Selon la technique la plus couramment utilisée pour la fixation du bras d'essuie-glace sur l'arbre de sortie et l'entraînement en rotation du bras d'essuie-glace par l'arbre de sortie, la portion d'extrémité de l'arbre d'entraînement comporte un tronçon conique qui est reçu dans un perçage conique complémentaire débouchant de la tête d'entraînement et qui se prolonge par un tronçon d'extrémité fileté sur lequel est vissé un écrou de serrage dont la face radiale de serrage coopère avec une portion en vis-à-vis dans la face supérieure de la tête d'entraînement.

Selon un agencement connu, l'axe du perçage conique est perpendiculaire aux faces planes supérieure et inférieure de la tête d'entraînement du bras d'essuie-glace de manière que, en position montée et serrée, ces deux faces s'étendent dans des plans perpendiculaires à l'axe de rotation de l'arbre de sortie. Cet agencement géométrique détermine l'orientation générale du bras d'essuie-glace, du balai d'essuie-glace qui est articulé à l'extrémité du bras et de la lame d'essuyage portée par le balai d'essuie-glace, par rapport à la structure du véhicule et donc par rapport à la surface à essuyer telle que le pare-brise du véhicule.

Par ailleurs, il est connu du document FR-A-2.563.482 de fabriquer une tête d'entraînement qui est vrillée de telle sorte que l'axe du perçage conique est incliné par rapport à l'axe d'articulation du bras sur la tête, ce qui permet d'obtenir une orientation privilégiée de la lame par rapport au pare-brise. Toutefois, une telle inclinaison est déterminée au cours de la fabrication de la tête et ne peut être modifiée par la suite.

Or, pour certaines applications, il est souhaitable de disposer d'une faculté de réglage de l'orientation du bras d'essuie-glace autour de son axe longitudinal, et donc de la lame d'essuyage, tout en standardisant au maximum les différents composants des essuie-glaces.

Dans ce but, l'invention propose un essuie-glace du type mentionné précédemment, caractérisé en ce que le corps de la tête d'entraînement comporte un alésage d'axe dans lequel est montée une bague de réglage dans laquelle est formé ledit perçage conique dont l'axe forme un angle aigu de réglage avec l'axe d'une surface périphérique de la bague, de manière à règler ladite inclinaison de l'axe du perçage conique en modifiant la position angulaire de la bague par rapport à la tête, autour de l'axe au cours du montage de la tête d'entraînement sur l'arbre de sortie.

Selon d'autres caractéristiques de réalisations facultatives de l'invention :
- l'alésage de la tête d'entraînement est un alésage cylindrique dont l'axe est perpendiculaire audit plan de référence, et la surface périphérique de la bague de réglage est cylindrique ;
- il est prévu des moyens d'indexation angulaire de la bague par rapport au corps de la tête d'entraînement ;
- la bague possède un collet radial dont une face coopère avec une portion en vis-à-vis de la face inférieure du corps de la tête d'entraînement qui est parallèle au plan de référence ;
- une rondelle est interposée entre la face radiale de serrage de l'écrou et la portion en vis-à-vis dans la face supérieure de la tête d'entraînement;
- la rondelle possède deux faces planes opposées qui forment entre elles un angle égal à l'angle de réglage de la bague, la portion en vis-à-vis dans la face supérieure de la tête d'entraînement étant parallèle au plan de référence ;
- il est prévu des moyens d'indexation angulaire de la rondelle par rapport à la bague de réglage ;
- les moyens d'indexation comportent des repères de réglage formés sur la face inférieure de la bague de réglage et sur la face supérieure de la rondelle de réglage et un repère de référence formé sur le corps de la tête d'entraînement ;
- les repères de réglage sont appariés avec une série de crans de réglage formés à la périphérie de l'élément correspondant, bague de réglage et rondelle, qui coopèrent avec un doigt d'indexation associé au corps de la tête d'entraînement et qui est reçu dans les crans pour indexer angulairement en position réglée la bague et la rondelle par rapport au corps de la tête d'entraînement et empêcher toute rotation relative de ces éléments après le réglage.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en section selon la ligne 1-1 de la figure 7 qui représente un mode de réalisation de l'essuie-glace selon l'invention dont le règlage est en position neutre, c'est-à-dire dans une position dans laquelle la lame d'essuyage formant un angle sensiblement égal à 90° par rapport à la surface à essuyer ;
- les figures 2 et 3 sont des vues similaires à celle de la figure 1 illustrant deux positions maximales de réglage de l'inclinaison du bras d'essuie-glace par rapport à la position neutre illustrée à la figure 1 ;
- les figures 4 à 6 sont des vues illustrant de manière schématique la position de la lame d'essuyage par rapport à la vitre à essuyer, pour les différentes positions de réglage illustrées respectivement aux figures 1 à 3 ;
- la figure 7 est une vue partielle de dessus de la figure 1 ;
- la figure 8 est une vue partielle de dessous de la figure 1, sans l'arbre de sortie ;
- la figure 9 est une vue, en section selon la ligne 9-9 de la figure 7, de la rondelle de réglage ; et
- la figure 10 est une vue, en section selon la ligne 10-10 de la figure 8, de la bague de réglage.

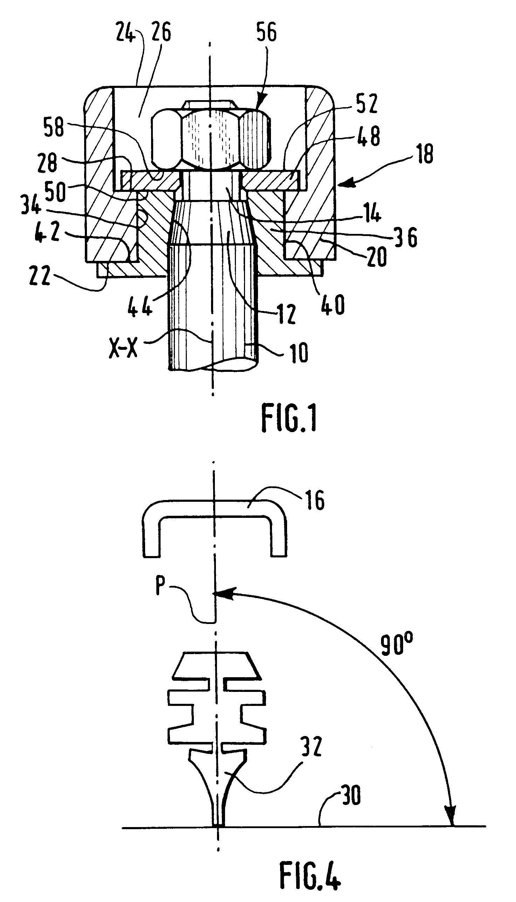

On reconnaît sur la figure 1 l'arbre d'entraînement 10, ou arbre de sortie, d'une unité d'entraînement (non représentée) d'un essuie-glace.

Selon une conception connue, l'arbre 10 comporte, à son extrémité libre, un tronçon conique 12, dont l'angle au sommet est par exemple égal à 19°, et qui se prolonge par un tronçon coaxial fileté 14.

L'arbre d'entraînement 10 est un arbre rotatif autour de son axe X-X de manière à entraîner dans un mouvement de rotation alternatif un bras d'essuie-glace, dont une portion 16 est illustrée aux figures 4 à 6 et qui comporte à cet effet une tête d'entraînement 18 comportant un corps massif 20 généralement réalisé par moulage en fonderie.

La portion arrière de la tête d'entraînement 18 illustrée sur les figures qui est prévue pour être reliée à l'arbre de sortie 10, comporte une face inférieure plane 22 et une face supérieure 24 dans laquelle est formé un évidement 26 dont le fond 28 est une portion de surface plane annulaire parallèle à la surface inférieure 22.

La portion de surface 28 est donc parallèle à la face inférieure 22 qui, au sens de l'invention, constitue le plan dit de référence pour apprécier l'orientation générale du plan longitudinal dans lequel est contenu sensiblement le bras d'essuie-glace par rapport à l'axe X-X et, indirectement, par rapport à la surface à essuyer 30 avec laquelle coopère une lame d'essuyage 32 reliée, par une structure non représentée, au bras d'essuie-glace 16.

Le corps 20 de la tête d'entraînement 18 comporte un alésage cylindrique 34 qui débouche d'une part dans la face inférieure 22 et d'autre part dans la portion de surface annulaire 28.

L'axe de l'alésage cylindrique 34 est perpendiculaire au plan de référence 22.

Les moyens de montage et de serrage de la tête d'entraînement 18 sur l'extrémité de l'arbre de sortie 10 comporte une bague de réglage 36.

La bague, ou douille, de réglage 36 comporte une surface périphérique extérieure 38 qui est cylindrique et qui est reçue dans l'alésage 34.

Le corps de la bague 36 se prolonge à sa partie inférieure par un collet radial 40 dont la face supérieure 42 est une face radiale perpendiculaire à l'axe Z-Z de la surface cylindrique extérieure 38 et coopère avec le plan de référence 22.

A l'intérieur de la bague 36 est formé un perçage conique 44 dont l'angle au sommet est sensiblement égal à celui du tronçon 12 de l'arbre 10 et par exemple à 19°.

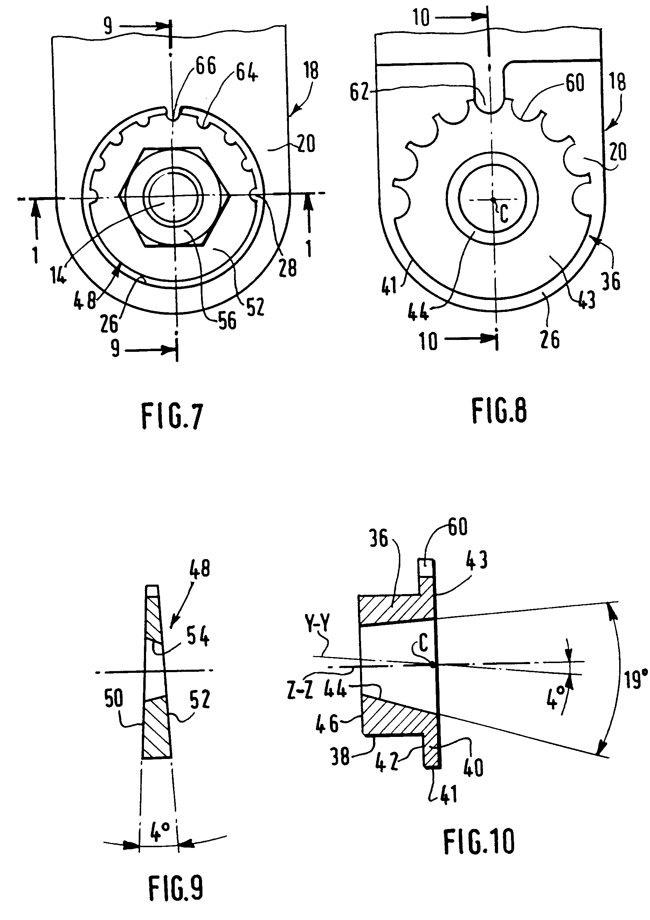

Comme on peut le voir sur la figure 10, l'axe Y-Y du perçage conique 44 forme un angle aigu avec l'axe Z-Z de la surface cylindrique extérieure 38 de la bague.

Cet angle aigu, mesuré dans le plan déterminé par les deux axes Y-Y et Z-Z, et qui constitue l'angle de réglage au sens de l'invention, est par exemple égal à 4°.

Les deux axes Y-Y et Z-Z sont concourants en un point C situé sensiblement au niveau de la face supérieure 42 du collet radial 40 et donc situé sensiblement au niveau du plan de référence 22 de la tête d'entraînement 18, lorsque la bague est en position montée dans l'alésage 34.

La face supérieure 46 de la bague 36 est une face annulaire plane perpendiculaire à l'axe Z-Z et donc parallèle à la face supérieure 42 du collet 40.

Les moyens de serrage comportent également une rondelle 48 illustrée à la figure 9.

Les faces inférieure 50 et supérieure 52 de la rondelle 48 ne sont pas parallèles entre elles mais forment un angle aigu égal à l'angle de réglage de la bague de réglage 36 et donc, dans l'exemple illustré sur les figures, sensiblement égal à 4°.

La rondelle 48 comporte en son centre un perçage 54 pour permettre le passage du tronçon fileté 14 de l'arbre de sortie 10.

Les moyens de serrage comportent enfin un écrou de serrage 56 qui est monté vissé sur le tronçon fileté 14 et dont la face radiale inférieure de serrage 58 coopère avec la face supérieure 52 de la rondelle 48.

Comme on peut le voir sur la figure 8, la face inférieure 43 de la bague comporte une série de neuf repères, de - 4° à + 4°, qui permettent d'orienter régulièrement la bague de réglage par rapport au corps 20 de la tête d'entraînement 18.

A cet effet, un cran 60 est formé en face de chaque repère, dans le bord latéral 41 du collet radial 40, et la face inférieure 36 du corps 20 comporte un doigt d'indexation 62 qui est prévu pour être reçu dans l'un des crans 60.

Dans la position illustré aux figures 1, 4 et 8, le doigt 62 est reçu dans le cran 60 formé en vis-à-vis du repère "0°" qui correspond à la position de réglage neutre de l'orientation du bras dans laquelle le plan de référence 22 est perpendiculaire à l'axe X-X en considérant la figure 1.

De la même manière, la face supérieure 52 de la rondelle de réglage 48, comporte une série de neuf repères appariés avec des crans 64 dans lesquels peuvent être reçus un doigt d'indexation 66 réalisé venu de matière avec le corps 20.

Pour la position illustrée aux figures 1, 4 et 7, la rondelle 48 est, comme la bague de réglage 36, indexée en position neutre, c'est-à-dire correspondant au repère de réglage "0°".

Grâce aux moyens de fixation et de serrage qui viennent d'être décrits, il est possible de modifier l'orientation de la lame d'essuyage 32 en modifiant l'orientation, dans un plan perpendiculaire à la direction longitudinale du bras, du plan de référence 22 par rapport à l'axe X-X.

Le règlage s'effectue, préalablement à l'opération de serrage final de l'écrou 56, en modifiant la position angulaire de la bague de réglage 36 et de la rondelle de réglage 48 par rapport au corps 20 de la tête d'entraînement 18.

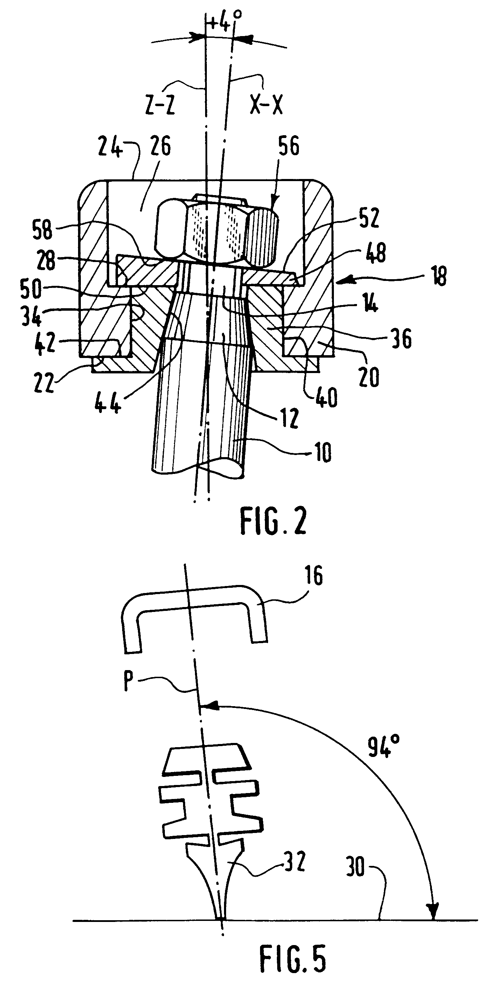

En se référant aux figures 2 et 5, qui correspondent à l'indexation simultanée de la bague 36 et de la rondelle 48 dans la position correspondant au repère "+ 4°", on constate que, dans le plan de la figure 2 qui est perpendiculaire à la direction longitudinale du bras, l'axe Z-Z forme un angle égal à + 4° par rapport à l'axe X-X de l'arbre d'entraînement 10.

Cette orientation se traduit par une inclinaison, du plan de référence 22 par rapport à la position qu'il occupait à la figure 1 sur laquelle il est perpendiculaire à l'axe X-X.

Cette inclinaison de + 4° par rapport à la position neutre illustrée à la figure 1, se traduit par une inclinaison de 94° du plan moyen P de la lame d'essuyage 32 par rapport à la surface à essuyer 30.

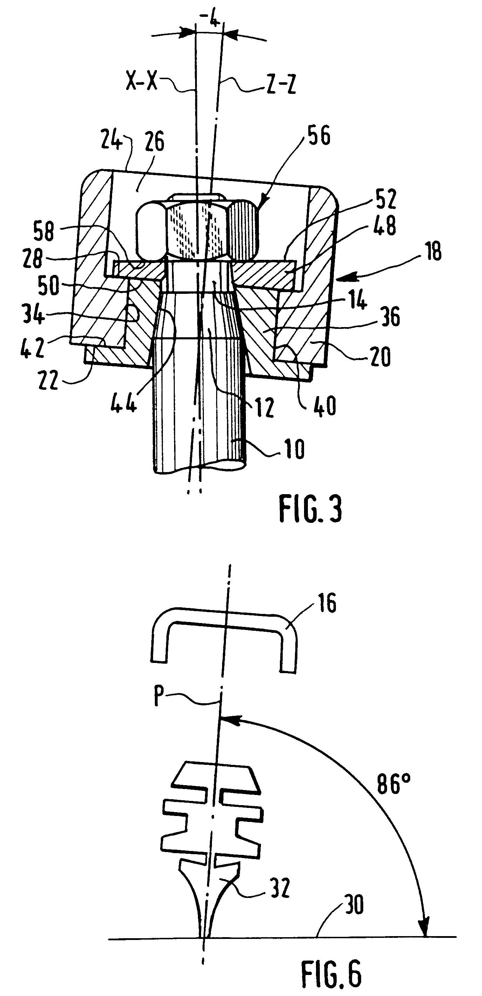

Un réglage symétrique est illustré aux figures 3 et 6 correspondant à l'indexation de la bague 36 et de la rondelle 48 sur les repères - 4°.

Ce nouveau réglage provoque une inclinaison du plan de référence 22 par rapport à l'axe X-X qui se traduit par une inclinaison de + 86° du plan médian P de la lame d'essuyage 32 par rapport à la surface à essuyer 30.

Il est bien entendu possible d'adopter tous les règlages intermédiaires compris entre 86 et 94°, de degré en degré, en indexant simultanément la bague 36 et la rondelle 48 dans la position angulaire recherchée.

Une fois le réglage effectué, il suffit de serrer l'écrou 56 qui provoque, du fait de l'effort de serrage et de l'expansion radiale de la bague 36, l'immobilisation relative de la tête d'entraînement 20 par rapport à la bague 36 et donc par rapport à l'arbre d'entraînement 10 de manière que ce dernier assurer ultérieurement un entraînement efficace en rotation du bras d'essuie-glace.

Comme il ressort clairement de la description qui précède, l'utilisation combinée d'une bague 36 avec une rondelle 48 permet de rétablir la perpendicularité de la surface 52 avec laquelle coopère la face radiale de serrage 58 de l'écrou 56 par rapport à l'axe X-X de l'arbre de sortie 10, et ceci quel que soit le réglage adopté.

Toutefois, à titre de variante non représentée, il est possible de remplacer la rondelle rigide 48 par une rondelle déformable élastiquement qui permet de compenser le défaut d'alignement de la face radiale annulaire par rapport à l'axe X-X lors du serrage.

## Revendications

1. Essuie-glace de véhicule automobile du type comportant un bras d'essuie-glace dont la tête d'entraînement (18) est fixée, par une extrémité longitudinale, sur la portion d'extrémité d'un arbre de sortie (10) appartenant à une unité d'entraînement de l'essuie-glace, et du type dans lequel la portion d'extrémité de l'arbre de sortie (10) comporte un tronçon conique (12) qui est reçu dans un perçage conique complémentaire débouchant (44) de la tête d'entraînement (18) et qui se prolonge par un tronçon d'extrémité (14) sur lequel est vissé un écrou de serrage (56) dont la face radiale de serrage (58) coopère avec une portion en vis-à-vis dans la face supérieure de la tête d'entraînement (18), et du type dans lequel l'axe (Y-Y) du perçage conique (44) est incliné, dans un plan perpendiculaire à la direction longitudinale du bras, par rapport à un plan de référence (22) de la tête d'entraînement (18), caractérisé en ce que le corps (20) de la tête d'entraînement comporte un alésage (34) d'axe (Z-Z) dans lequel est montée une bague de réglage (36) dans laquelle est formé ledit perçage conique (44) dont l'axe (Y-Y) forme un angle aigu de réglage avec l'axe (Z-Z) d'une surface périphérique de la bague (36), de manière à règler ladite inclinaison de l'axe (Y-Y) du perçage conique (44) en modifiant la position angulaire de la bague (36) par rapport à la tête (18), autour de l'axe (Z-Z), au cours du montage de la tête d'entraînement (18) sur l'arbre de sortie (10).

2. Essuie-glace selon la revendication 1, caractérisé en ce que l'alésage (34) de la tête d'entraînement est un alésage cylindrique dont l'axe (Z-Z) est perpendiculaire audit plan de référence (22), et en ce que la surface périphérique (38) de la bague de réglage (36) est cylindrique.

3. Essuie-glace selon la revendication 2, caractérisé en ce qu'il est prévu des moyens d'indexation pour l'orientation angulaire de la bague (36) par rapport au corps (20) de la tête d'entraînement (18).

4. Essuie-glace selon l'une des revendications 1 ou 3, caractérisé en ce que la bague (36) possède un collet radial (40) dont une face (42) coopère avec une portion en vis-à-vis de la face inférieure (22) du corps (20) de la tête d'entraînement (18) qui est parallèle au plan de référence.

5. Essuie-glace selon l'une quelconque des revendications 2 à 4, caractérisé en ce qu'une rondelle (48) est interposée entre la face radiale de serrage (58) de l'écrou (56) et la portion en vis-à-vis (28) dans la face supérieure de la tête d'entraînement (18).

6. Essuie-glace selon la revendication 5, caractérisé en ce que la rondelle possède deux faces planes (50, 52) qui forment entre elles un angle égal à l'angle de réglage de la bague, et en ce que la portion en vis-à-vis (28) dans la face supérieure de la tête d'entraînement est parallèle au plan de référence (22).

7. Essuie-glace selon la revendication 6, caractérisé en ce qu'il est prévu des moyens d'indexation pour l'orientation angulaire de la rondelle (48) par rapport à la bague de réglage (36).

8. Essuie-glace selon les revendications 3 à 7, caractérisé en ce que les moyens d'indexation comportent des repères de réglage formés sur la face inférieure (43) de la bague de réglage (36) et sur la face supérieure (52) de la rondelle de réglage (46) et un repère de référence (62, 66) formé sur le corps (20) de la tête d'entraînement (18).

9. Essuie-glace selon la revendication 8, caractérisé en ce que les repères de réglage sont appariés à une série de crans de réglage (60, 64) formés à la périphérie de l'élément correspondant, bague de réglage (36) et rondelle (48), qui coopèrent avec un doigt d'indexation (62, 66) associé au corps de la tête d'entraînement (18) et qui est reçu dans les crans (60, 64) pour indexer angulairement en position réglée la bague (36) et la rondelle (48) par rapport au corps (20) de la tête d'entraînement (18) et empêcher toute rotation relative de ces éléments (20, 36, 48) après le réglage.

## Claims

1. Motor vehicle wiper of the type having a wiper arm whose drive head (18) is fixed, by one longitudinal end, to the end portion of an output shaft (10) belonging to a drive unit for the wiper, and of the type in which the end portion of the output shaft (10) has a tapered length (12) which is received in a complementary open-ended tapered drilling (44) in the drive head (18) and which is extended by an end length (14) onto which is screwed a clamping nut (56) whose radial clamping face (58) cooperates with a facing portion in the top face of the drive head (18), and of the type in which the axis (Y-Y) of the tapered drilling (14) is inclined, in a plane perpendicular to the longitudinal direction of the arm, with respect to a reference plane (22) of the drive head (18), characterised in that the body (20) of the drive head has a bore (34) of axis (Z-Z) in which is mounted an adjustment ring (36) in which is formed the said tapered drilling (44) whose axis (Y-Y) forms an acute adjustment angle with the axis (Z-Z) of a peripheral surface of the ring (36), so as to adjust the said inclination of the axis (Y-Y) of the tapered drilling (44) by modifying the angular position of the ring (36) with respect to the head (18), about the axis (Z-Z), in the course of the mounting of the drive head (18) on the output shaft (10).

2. Wiper according to Claim 1, characterised in that the bore (34) in the drive head is a cylindrical bore whose axis (Z-Z) is perpendicular to the said reference plane (22), and in that the peripheral surface (38) of the adjustment ring (36) is cylindrical.

3. Wiper according to Claim 2, characterised in that locating means are provided for the angular orientation of the ring (36) with respect to the body (20) of the drive head (18).

4. Wiper according to one of Claims 1 or 3, characterised in that the ring (36) has a radial collar (40), one face (42) of which cooperates with a facing portion of the bottom face (22) of the body (20) of the drive head (18) which is parallel to the reference plane.

5. Wiper according to any one of Claims 2 to 4, characterised in that a washer (48) is interposed between the radial clamping face (58) of the nut (56) and the facing portion (28) in the top face of the drive head (18).

6. Wiper according to Claim 5, characterised in that the washer has two plane faces (50, 52) which form between them an angle equal to the angle of adjustment of the ring, and in that the facing portion (28) in the top face of the drive head is parallel to the reference plane (22).

7. Wiper according to Claim 6, characterised in that locating means are provided for the angular orientation of the washer (48) with respect to the adjustment ring (36).

8. Wiper according to Claims 3 to 7, characterised in that the locating means includes adjustment markings formed on the bottom face (43) of the adjustment ring (36) and on the top face (52) of the adjustment washer (46), and a reference marking (62, 66) formed on the body (20) of the drive head (18).

9. Wiper according to Claim 8, characterised in that the adjustment markings are matched with a series of adjustment notches (60, 64) formed at the periphery of the corresponding element, adjustment ring (36) and washer (48), which cooperate with a locating finger (62, 66) associated with the body of the drive head (18) and which is received in the notches (60, 64) in order to locate the ring (36) and washer (48) angularly in the set position with respect to the body (20) of the drive head (18) and prevent any relative rotation of these elements (20, 36, 48) after adjustment.

## Patentansprüche

1. Scheibenwischer in der Ausführung mit einem Scheibenwischerarm, dessen Antriebskopf (18) am Endabschnitt einer Ausgangswelle (10) befestigt ist, die zu einer Wischerantriebseinheit gehört, wobei der Endabschnitt der Ausgangswelle (10) ein konisches Teilstück (12) umfaßt, das in eine durchgehende formschlüssige konische Bohrung (44) des Antriebskopfes (18) eingesetzt ist und das durch ein Endstück (14) verlängert wird, an dem eine Spannmutter (56) aufgeschraubt ist, deren radiale Spannfläche (58) mit einem gegenüberliegenden Abschnitt in der Oberseite des Antriebskopfes (18) zusammenwirkt, und wobei die Achse (Y-Y) der konischen Bohrung (44) in einer senkrecht zur Längsrichtung des Scheibenwischerarms verlaufenden Ebene im Verhältnis zu einer Bezugsebene (22) des Antriebskopfes (18) geneigt ist, **dadurch gekennzeichnet,** daß der Körper (20) des Antriebskopfes eine Bohrung (34) mit der Achse (Z-Z) enthält, in die ein Einstellring (36) eingesetzt ist, in den die besagte konische Bohrung (44) eingearbeitet ist, deren Achse (Y-Y) mit der Achse (Z-Z) einer Umfangsfläche des Einstellrings (36) einen spitzen Einstellwinkel bildet, um die besagte Neigung der Achse (Y-Y) der konischen Bohrung (44) einzustellen, indem die Winkelposition des Einstellrings (36) im Verhältnis (18) zum Antriebskopf um die Achse (Z-Z) entsprechend verändert wird, was im Zuge der Anbringung des Antriebskopfes (18) an der Ausgangswelle (10) erfolgt.

2. Scheibenwischer nach Anspruch 1 , **dadurch gekennzeichnet,** daß die Bohrung (34) des Antriebskopfes eine zylindrische Bohrung ist, deren Achse (Z-Z) senkrecht zu der besagten Bezugsebene (22) verläuft, und daß die Umfangsfläche (38) des Einstellrings (36) zylindrisch ausgebildet ist.

3. Scheibenwischer nach Anspruch 2 , **dadurch gekennzeichnet,** daß Positionierungsmittel für die Winkelausrichtung des Einstellrings (36) im Verhältnis zum Körper (20) des Antriebskopfes (18) vorgesehen sind.

4. Scheibenwischer nach einem der Ansprüche 1 oder 3, **dadurch gekennzeichnet,** daß der Einstellring (36) einen radialen Bund (40) besitzt, von dem eine Fläche (42) mit einem gegenüberliegenden Abschnitt der Unterseite (22) des Körpers (20) des Antriebskopfes (18) zusammenwirkt, die parallel zur Bezugsebene verläuft.

5. Scheibenwischer nach einem der Ansprüche 2 bis 4, **dadurch gekennzeichnet,** daß zwischen der radialen Spannfläche (58) der Spannmutter (56) und dem gegenüberliegenden Abschnitt (28) in der Oberseite des Antriebskopfes eine Scheibe (48) eingefügt ist.

6. Scheibenwischer nach Anspruch 5 , **dadurch gekennzeichnet,** daß die Scheibe zwei gegenüberliegende ebene Flächen (50, 52) besitzt, die miteinander einen Winkel bilden, der gleich dem Einstellwinkel des Einstellrings ist, und daß der gegenüberliegende Abschnitt (28) in der Oberseite des Antriebskopfes parallel zur Bezugsebene (22) verläuft.

7. Scheibenwischer nach Anspruch 6 , **dadurch gekennzeichnet,** daß Positionierungsmittel für die Winkelausrichtung der Scheibe (48) im Verhältnis zum Einstellring (36) vorgesehen sind.

8. Scheibenwischer nach den Ansprüchen 3 bis 7, **dadurch gekennzeichnet,** daß die Positionierungsmittel Einstellmarkierungen umfassen, die an der Unterseite (43) des Einstellrings (36) und an der Oberseite (52) der Einstellscheibe (46) ausgebildet sind, sowie eine Bezugsmarkierung (62, 66), die am Körper (20) des Antriebskopfes (18) ausgebildet ist.

9. Scheibenwischer nach Anspruch 8 , **dadurch gekennzeichnet,** daß die Einstellmarkierungen mit einer Reihe von Einstellrasten (60, 64) zusammengepaßt sind, die am Umfang des entsprechenden Elements - Einstellring (36) und Scheibe (48) - ausgebildet sind und die mit einem am Antriebskopf (18) vorgesehenen Rastfinger (62, 66) zusammenwirken, der in die Einstellrasten (60, 64) eingreift, um die Winkelpositionierung des Einstellrings (36) und der Scheibe (48) im Verhältnis zum Körper (20) des Antriebskopfes (18) in einer Einstellposition herbeizuführen und jede relative Verdrehung dieser Elemente (20, 36, 48) nach der Einstellung zu verhindern.
